# FASCICULE DE BREVET EUROPEEN

(11) **EP 1 609 372 B1**
(45) Date de publication et mention de la délivrance du brevet: **17.05.2017**
(21) Numéro de dépôt: 05300512.0
(22) Date de dépôt: 24.06.2005
(51) Int. Cl.: A23K 20/105, A23K 20/111, A23K 20/10, A23K 50/10

(54) **ADDITIF ALIMENTAIRE POUR RUMINANTS LAITIERS PERMETTANT D'ACCROÎTRE LA PRODUCTION DE LAIT**
FUTTERMITTELZUSATZZUSAMMENSETZUNG FÜR WIEDERKÄUER ZUR ERHÖHUNG DER MILCHPRODUCKTION
RUMINANT FEED ADDITIVE FOR INCREASING MILK PRODUCTION

(30) Priorité: 25.06.2004 FR 0406976
(43) Date de publication de la demande: 28.12.2005
(73) Titulaire: Techna France Nutrition, 44220 Couëron (FR)
(72) Inventeur: Banchereau, Thi, 44700, ORVAULT (FR); Mousset, Jean-Luc, 44190, GORGES (FR)
(74) Mandataire: Catherine, Alain

(56) Documents cités:
- EP-A- 1 106 070
- US-A- 5 565 211
- US-B1- 6 551 628
- ILSLEY, S.E., MILLER, H.M., GREATHEAD, H.M.R., AND KAMEL, C.: "PLANT EXTRACTS AS SUPPLEMENTS FOR LACTATING SOWS: EFFECT ON PIGLET PERFORMANCE, SOW FOOD INTAKE AND DIET DIGESTABILITY" JOURNAL OF ANIMAL SCIENCE, vol. 77, 2003, pages 247-254, XP008054810 USNEW YORK, NY
- PATENT ABSTRACTS OF JAPAN vol. 1999, no. 12, 29 octobre 1999 (1999-10-29) & JP 11 196776 A (NISSHIN FLOUR MILLING CO LTD), 27 juillet 1999 (1999-07-27)
- DATABASE BIOSIS [Online] BIOSCIENCES INFORMATION SERVICE, PHILADELPHIA, PA, US; 1995, EL-MARAGHY S S M: "Effect of some spices as preservative for storage of lentil (Lens esculenta L.) seeds" XP002351796 Database accession no. PREV199698820541 & FOLIA MICROBIOLOGICA, vol. 40, no. 5, 1995, pages 490-492, ISSN: 0015-5632
- EVANS J D ET AL: "EFFECTS OF THYMOL ON RUMINAL MICROORGANISMS" CURRENT MICROBIOLOGY, NEW YORK, NY, US, vol. 41, no. 5, 2000, pages 336-340, XP008020331 ISSN: 0343-8651

## Description

La présente invention a trait au domaine général des additifs alimentaires pour ruminants laitiers. Elle concerne en particulier des additifs alimentaires apportés à ce genre d'animaux pour accroître leur production de lait.

Il est connu d'administrer des additifs alimentaires aux animaux pour améliorer leurs performances, tel que décrit dans le document ILSLEY et al. (Animal Science 2003, vol. 77) ou dans le document JP-A-11 196 776.

Chez les ruminants laitiers, le volume quotidien de lait produit est notamment déterminé par la qualité de la digestion des aliments ingérés.

Il est en particulier important que la dégradation ruminale des matières organiques (protéines et amidons notamment) soit optimale, de manière à favoriser une dégradation au niveau de l'intestin grêle qui permet l'optimisation du profil protéique de la ration ; une telle orientation de la dégradation au niveau de l'intestin grêle assure ainsi une optimisation du rapport volume de lait produit/quantité d'aliment ingéré.

Ainsi, la présente invention consiste à fournir un nouvel additif alimentaire pour ruminants laitiers, utilisé en vue d'accroître leur production en lait par action sur la flore ruminale, et dont les principes actifs sont d'origine naturelle ou « identique naturelle ». Conformément à l'invention, la demanderesse a mis en évidence que l'utilisation d'un additif alimentaire comportant comme composés actifs une association de thymol, d'eugénol (de préférence sous forme d'une huile essentielle de clou de girofle) et de cinnamaldéhyde, mis sur support, assure une augmentation significative du volume de lait produit par jour et par animal.

Des huiles essentielles sont décrites dans les documents WO-A-03/009694 et EP-A-1 106 070, pour des compositions naturelles anti-microbiennes destinées à être appliquées sur des fruits ou légumes afin d'assurer leur protection à l'encontre de pathogènes.

Mais cet état de la technique ne divulgue pas un additif alimentaire destiné aux ruminants laitiers, qui serait en plus adapté à une utilisation en vue d'augmenter la production laitière de tels ruminants.

Le thymol utilisé peut être d'origine de synthèse ou naturelle. Dans ce dernier cas, il est de préférence introduit dans l'additif par le biais d'une huile essentielle ; on utilise alors avantageusement une huile essentielle de plante choisie par exemple parmi *Thymus vulgaris L., Thymus zygis L., Corydothumus capitatus,* ou *Origanum compactum.*

L'eugénol utilisé peut également être d'origine de synthèse ou naturelle. Dans ce dernier cas, il est lui aussi de préférence introduit dans l'additif alimentaire par le biais d'une huile essentielle. De manière intéressante, on utilisera en particulier de l'huile essentielle de girofle obtenue de préférence par extraction à partir de clous de *Syzygium aromaticum* (encore appelé *Eugenia caryophyllus*) ; il est à noter que cette huile essentielle de clou de girofle contient de manière classique, comme principal composé actif, entre 75 et 90 % d'eugénol.

Le cinnamaldéhyde peut être obtenu par synthèse ; il peut aussi être introduit dans l'additif à partir d'une huile essentielle, en particulier à partir d'huile essentielle de cannelle (on parle alors d'extrait de cannelle). Dans ce dernier cas, on choisira de préférence une huile essentielle de cannelle de Ceylan (*Cinnamomum zeylanicum Nees*) ou une huile essentielle de cannelle de Chine (*Cinnamomum aromaticum Nees*)*,* qui sont connues pour leur teneur élevée en cinnamaldéhyde, et plus précisément en trans-cinnamaldéhyde (respectivement jusqu'à 70 % et 90 %).

Les principes actifs précités, destinés à être incorporés à l'alimentation usuelle des ruminants laitiers, sont mis préalablement sur un support adapté, bien connu de l'homme du métier, pour se présenter sous la forme d'un additif alimentaire.

A titre d'exemple, les principes actifs en question sont mis sur un support de type sépiolite, carbonate de calcium, rafle de maïs, remoulage, ou tout mélange de certains de ces composants. L'additif peut se présenter sous forme de poudre.

L'additif ainsi obtenu comprend avantageusement de 3 à 20 % en poids de thymol (et encore avantageusement de 5 à 20 %), de 0,7 à 4,5 % en poids d'eugénol (ou encore de 0,7 à 7 % d'huile essentielle de girofle), de 3 à 10 % en poids de cinnamaldéhyde, et avantageusement de 65,5 à 93,3 % en poids de support.

Pour son introduction dans l'alimentation, l'additif alimentaire est de préférence dilué sous la forme d'un prémélange d'additif(s). Pour sa dilution, cet additif est mélangé avec du sépiolite, du carbonate de calcium, de la rafle de maïs, du remoulage ou tout mélange de certains de ces composants ; on ajoutera avantageusement tout autre composant additif éventuellement nécessaire, comme par exemple des sels métaux (sulfate de zinc, sulfate de manganèse, sulfate de fer ...), sulfate de sodium ou encore d'autres principes actifs.

A titre indicatif, ce prémélange d'additif(s) contient alors entre 0,5 et 5 % en poids de l'additif alimentaire d'intérêt (avantageusement de 1 à 5 %), c'est-à-dire entre 0,1 et 0,7 % en poids (et de préférence encore de 0,3 à 0,4 % en poids) de principes actifs.

Le prémélange d'additif(s) alimentaire(s) est ensuite introduit dans un aliment, par exemple de type aliment composé concentré, aliment de production, aliment correcteur, aliment minéral, ou encore ration de base des ruminants (fourrage), à une concentration comprise entre 0,1 et 1 % en poids. De manière intéressante, l'aliment contient ainsi de 0,7 à 9 ppm de thymol (avantageusement de 0,9 à 9 ppm), de 0,1 à 2 ppm d'eugénol (avantageusement de 0,2 à 2 ppm), et de 0,6 à 6 ppm de cinnamaldéhyde.

De manière générale, les animaux pourront ingérer entre 25 mg et 2000 mg des principes actifs en question, par jour. De préférence, ils ingéreront ces principes actifs à des doses journalières comprises entre 25 mg et 1000 mg (et de préférence encore entre 25 mg et 75 mg).

Des essais sur le terrain et en station expérimentale ont été menés, sur des vaches laitières, pour montrer l'effet quantitatif et qualitatif de l'additif selon l'invention sur leur production de lait.

### Essai 1 : Etude dans une ferme expérimentale de l'effet de l'administration d'un additif alimentaire contenant une association de thymol, d'huile essentielle de girofle et de cinnamaldéhyde, sur la production de lait par des vaches laitières traitées.

### 1. Préparation des rations alimentaires de l'essai

Deux rations alimentaires pour vaches laitières sont préparées pour l'essai :
- une ration alimentaire classique « T », constituant la ration témoin ; et
- une ration alimentaire d'essai « A », pour l'apport aux animaux de thymol, d'huile essentielle de girofle et de cinnamaldéhyde, par le biais d'un additif alimentaire « C ».

L'additif alimentaire « C » est constitué de 4,3 % de thymol, de 1,1 % d'huile essentielle de girofle, de 5,4 % de cinnamaldéhyde, de 70 % de rafle de maïs et de 19, 2 % de CaCO₃.

Il est incorporé à raison de 1,1 % dans un prémélange d'additifs « B », associé à 34 % de carbonate, à 20,8 % de remoulage et 44 % de sels métaux.

La composition complète de ces deux rations alimentaires est présentée ci-dessous :

| Composés | Ration alimentaire témoin « T » % matière sèche totale - (quantité de matière sèche par animal/jour) | Ration alimentaire d'essai « A » % matière sèche totale - (quantité de matière sèche par animal/jour) |
|---|---|---|
| Ensilage de maïs | 20,5 - (4 kg) | 20,5 - (4 kg) |
| Ensilage de vesce - avoine | 15,4 - (3 kg) | 15,4 - (3 kg) |
| Paille | 5,1 - (1 kg) | 5,1 - (1 kg) |
| Foin de luzerne | 12,8 - (2,5 kg) | 12,8 - (2,5 kg) |
| Aliment concentré (tourteau soja et tournesol, céréale, minéraux, vitamine...) | 46,2 - (9 kg) | 46,12 - (9 kg) |
| Prémélange d'additifs « B » contenant l'additif alimentaire « C » objet de l'étude | - | 0,08 - (0,015 kg) |

On notera que le prémélange d'additifs « B » est introduit dans la ration alimentaire d'essai « A », par le biais d'une incorporation préalable dans l'aliment concentré.

### 2. Protocole

L'essai est conduit sur un lot de 63 à 70 vaches laitières de race prim'holstein, en stade de lactation stable (le nombre de jours moyen de lactation est de 191 à 207), suivant deux périodes expérimentales successives déterminées :
a - une période pré-expérimentale de 3 mois, au cours de laquelle les vaches laitières reçoivent la ration alimentaire témoin « T », pour constituer une période de référence, suivie par,
b - une période expérimentale de 3 mois, où les mêmes vaches laitières reçoivent la ration alimentaire d'essai « A » contenant l'additif alimentaire « C », à hauteur de 0,34 g d'additif par vache laitière et par jour (soit 15 g de prémélange d'additif « B »).

La quantité de lait produite par ces vaches laitières est mesurée tout au long des deux périodes précitées. Le stade de lactation étant stable, une augmentation éventuelle de la production laitière n'est pas biaisée par un nombre de vêlages important, qui entraîneraient des débuts de lactation dans les périodes pré-expérimentale et expérimentale.

Tout au long de ces deux périodes, le taux de protéine du lait est également mesuré. Le suivi de ce paramètre, déterminant dans le prix du litre de lait, permet d'évaluer la qualité du lait produit par les vaches laitières pendant l'essai.

### 3. Résultats

| Périodes | **Période pré-expérimentale** Vaches laitières recevant la ration alimentaire témoin « T » | **Période expérimentale** Vaches laitières recevant la ration alimentaire d'essai « A » |
|---|---|---|
| Quantité moyenne de lait produite en kg/vache laitière/jour | 25,4 | 28,4 |
| Taux moyen de protéine dans le lait, exprimé en g/kg | 29,1 | 30,5 |

Les résultats correspondants montrent une augmentation significative du volume de lait produit par les vaches laitières recevant la ration alimentaire d'essai « A » (apportant les composés actifs thymol, eugénol sous forme d'huile essentielle de girofle et cinnamaldéhyde), par rapport à la période où elles reçoivent la ration témoin «T».

Par ailleurs, ces résultats montrent, en même temps que l'augmentation de la production laitière, un accroissement du taux de protéine dans le lait des vaches recevant la ration alimentaire d'essai « A », alors que l'on pourrait s'attendre à une diminution de ce taux compte tenu d'un effet de dilution. L'augmentation de ce taux de protéine correspond à une amélioration qualitative du lait produit.

### Essai 2 : Etude sur le terrain de l'effet de l'administration d'un additif alimentaire contenant une association de thymol, d'huile essentielle de girofle et de cinnamaldéhyde, sur la production de lait des vaches laitières traitées.

### 1. Préparation des rations alimentaires de l'essai

Deux rations alimentaires pour vaches laitières sont préparées pour l'essai :
- une ration alimentaire classique « T' », constituant la ration témoin ; et
- une ration alimentaire d'essai « A' », pour l'apport aux animaux de thymol, d'huile essentielle de girofle et de cinnamaldéhyde, par le biais d'un additif alimentaire « C' » incorporé dans un aliment minéral « B' »

L'additif alimentaire « C' » est constitué de 3,1 % de thymol, de 0,8 % d'huile essentielle de girofle, de 7,8 % de cinnamaldéhyde, de 68 % de rafle de maïs et de 20,3% du CaCO₃.

Il est incorporé à raison de 0,97 % dans l'aliment minéral « B' », associé à 16 % de carbonate, et à un mélange minéraux/vitamines.

La composition complète de ces deux rations alimentaires est présentée ci-dessous :

| | Ration alimentaire témoin « T' » % matière sèche totale - (quantité de matière sèche par animal/jour) | Ration alimentaire d'essai « A' » % matière sèche totale - (quantité de matière sèche par animal/jour) |
|---|---|---|
| Ensilage de maïs | 60 - (12 kg) | 60 - (12 kg) |
| Ensilage herbe | 20 - (4 kg) | 20 - (4 kg) |
| Foin | 5 - (1 kg) | 5 - (1 kg) |
| Aliment concentré (tourteau soja et tournesol, céréale, minéraux, vitamine...) | 15 - (3 kg) | 14 - (2,8 kg) |
| Aliment minéral « B' » contenant l'additif alimentaire « C' » objet de l'étude | - | 1 - (0,2 kg) |

### 2. Protocole

L'essai a été conduit sur quatre troupeaux de 55 à 70 vaches laitières de race prim'holstein (le nombre total de vaches est de 240), en stade de lactation stable (de 4,5 - 5 mois).

Les vaches reçoivent les rations alimentaires suivant trois périodes expérimentales successives déterminées :
a - une période pré-expérimentale de 2 mois, au cours de laquelle les vaches laitières reçoivent la ration alimentaire témoin « T' », pour constituer une période de référence, suivie par,
b - une période expérimentale de 2 mois, où les mêmes vaches laitières reçoivent la ration alimentaire d'essai « A' », contenant l'additif alimentaire « C' » à hauteur de 1,95g par vache laitière et par jour (soit 200g de l'aliment minéral « B' » par jour).
c - une période post-expérimental de 2 mois, où les mêmes vaches ne reçoivent plus la ration alimentaire d'essai « A' » et retournent à la ration alimentaire témoin « T' »

La quantité de lait produite par ces vaches laitières est mesurée tout au long des trois périodes précitées. Le stade de lactation étant stable, une augmentation éventuelle de la production laitière n'est pas biaisée par des débuts de lactation massifs dans la période expérimentale.

Tout au long de ces trois périodes, le taux de protéine (TP) du lait est également mesuré par un contrôle laitier mensuel.

### 3. Résultats

| | **Période pré-expérimentale** Vaches laitières recevant la ration alimentaire témoin « T' » | **Période expérimentale** Vaches laitières recevant la ration alimentaire d'essai « A' » | **Période post-expérimentale** Vaches laitières recevant la ration alimentaire témoin « T' » |
|---|---|---|---|
| Quantité moyenne de lait produite en kg/vache laitière/jour | 28,3 | 29,5 | 27,5 |
| Taux moyen de protéine dans le lait, exprimé en g/kg | 31,9 | 32,7 | 31,6 |

Là encore, les résultats correspondants montrent une augmentation significative du volume de lait produit par les vaches laitières recevant la ration alimentaire d'essai « A' » (apportant les composés actifs thymol, eugénol sous forme d'huile essentielle de girofle et cinnamaldéhyde), par rapport à la période pré-expérimentale où elles reçoivent la ration témoin « T' ».

Cela est confirmé par la diminution de la production de lait au cours de la période post-expérimentale, lors de l'arrêt de l'utilisation de l'additif alimentaire.

Ces résultats montrent également un accroissement du taux de protéine dans le lait des vaches recevant la ration alimentaire d'essai « A' ». Là encore, l'augmentation de ce taux de protéine correspond à une amélioration qualitative du lait produit.

Ainsi, ces deux essais 1 et 2 montrent et confirment que l'utilisation d'additifs alimentaires selon l'invention, et l'utilisation d'aliments contenant de tels additifs, a un intérêt certain pour améliorer quantitativement, mais aussi qualitativement, la production laitière de ruminants laitiers

## Revendications

1. Additif alimentaire destiné aux ruminants laitiers, pour une utilisation en vue d'augmenter la production laitière desdits ruminants laitiers, **caractérisé en ce qu'**il comprend comme composés actifs une association de thymol, d'eugénol et de cinnamaldéhyde, mis sur support.

2. Additif alimentaire selon la revendication 1, **caractérisé en ce qu'**il comporte, en poids, de 3 à 20 % de thymol, de 0,7 à 4,5 % d'eugénol et de 3 à 10 % de cinnamaldéhyde, mis sur support.

3. Additif alimentaire selon l'une quelconque des revendications 1 ou 2, **caractérisé en ce que** l'eugénol est introduit dans l'additif alimentaire par le biais d'une huile essentielle de girofle.

4. Additif alimentaire selon la revendication 3, **caractérisé en ce qu'**il comporte, en poids, de 3 à 20 % de thymol, de 0,7 à 7 % d'huile essentielle de girofle et de 3 à 10 % de cinnamaldéhyde.

5. Procédé pour augmenter la production laitière de ruminants laitiers, **caractérisé en ce que** lesdits ruminants laitiers reçoivent un additif alimentaire comprenant comme composés actifs une association de thymol, d'eugénol et de cinnamaldéhyde, mis sur support.

6. Procédé selon la revendication 5, **caractérisé en ce que** l'additif alimentaire comporte, en poids, de 3 à 20 % de thymol, de 0,7 à 4,5 % d'eugénol et de 3 à 10 % de cinnamaldéhyde, mis sur support.

7. Procédé selon l'une quelconque des revendications 5 ou 6, **caractérisé en ce que** l'eugénol est introduit dans l'additif alimentaire par le biais d'une huile essentielle de girofle.

8. Procédé selon la revendication 7, **caractérisé en ce que** l'additif alimentaire comporte, en poids, de 3 à 20 % de thymol, de 0,7 à 7 % d'huile essentielle de girofle et de 3 à 10 % de cinnamaldéhyde.

9. Procédé selon l'une quelconque des revendications 5 à 8, **caractérisé en ce que** l'additif alimentaire est incorporé dans un prémélange d'additif(s) alimentaire(s) pour ruminants laitiers ou dans un aliment pour animaux ruminants laitiers.

## Patentansprüche

1. Lebensmittelzusatz für Milch gebende Wiederkäuer, für eine Verwendung zum Zweck der Erhöhung der Milchproduktion der besagten Milch gebenden Wiederkäuer, **dadurch gekennzeichnet, daß** er als aktive Anteile eine auf ein Trägermaterial aufgebrachte Zusammensetzung aus Thymol, Eugenol und Zimtaldehyd aufweist.

2. Lebensmittelzusatz gemäß Anspruch 1, **dadurch gekennzeichnet, daß** er gewichtsbezogen 3 bis 20 % Thymol, 0,7 bis 4,5 % Eugenol und 3 bis 10 % Zimtaldehyd auf ein Trägermaterial aufgebracht aufweist.

3. Lebensmittelzusatz gemäß einem der Ansprüche 1 oder 2, **dadurch gekennzeichnet, daß** das Eugenol als ätherisches Öl aus Gewürznelken in den Lebensmittelzusatz eingebracht ist.

4. Lebensmittelzusatz gemäß Anspruch 3, **dadurch gekennzeichnet, daß** er gewichtsbezogen 3 bis 20 % Thymol, 0,7 bis 7 % ätherisches Öl aus Gewürznelken und 3 bis 10 % Zimtaldehyd aufweist.

5. Verfahren zum Erhöhen der Milchproduktion von Milch gebenden Wiederkäuern, **dadurch gekennzeichnet, daß** die Milch gebenden Wiederkäuer einen Lebensmittelzusatz erhalten, der als aktive Anteile eine auf ein Trägermaterial aufgebrachte Zusammensetzung aus Thymol, Eugenol und Zimtaldehyd aufweist.

6. Verfahren gemäß Anspruch 5, **dadurch gekennzeichnet, daß** der Lebensmittelzusatz gewichtsbezogen 3 bis 20 % Thymol, 0,7 bis 4,5 % Eugenol und 3 bis 10 % Zimtaldehyd auf ein Trägermaterial aufgebracht aufweist.

7. Verfahren gemäß einem der Ansprüche 5 oder 6, **dadurch gekennzeichnet, daß** das Eugenol als ätherisches Öl aus Gewürznelken in den Lebensmittelzusatz eingebracht ist.

8. Verfahren gemäß Anspruch 7, **dadurch gekennzeichnet, daß** der Lebensmittelzusatz gewichtsbezogen 3 bis 20 % Thymol, 0,7 bis 7 % ätherisches Öl aus Gewürznelken und 3 bis 10 % Zimtaldehyd aufweist.

9. Verfahren gemäß einem der Ansprüche 5 bis 8, **dadurch gekennzeichnet, daß** der Lebensmittelzusatz in ein Vorgemisch eines Lebensmittelzusatzes (oder von Lebensmittelzusätzen) für Milch gebende Wiederkäuer oder in ein Lebensmittel für Milch gebende wiederkäuende Tiere eingebracht wird.

## Claims

1. A feed additive for dairy ruminants, for use in order to increase the dairy production of said dairy ruminants, **characterized in that** it comprises as active compounds an association of thymol, eugenol and cinnamaldehyde, placed on a support.

2. The feed additive according to claim 1, **characterized in that** it includes, in weight, from 3 to 20 % of thymol, from 0.7 to 4.5 % of eugenol and from 3 to 10 % of cinnamaldehyde, placed on a support.

3. The feed additive according to any one of claims 1 or 2, **characterized in that** the eugenol is introduced into the feed additive through a clove essential oil.

4. The feed additive according to claim 3, **characterized in that** it includes, in weight, from 3 to 20 % of thymol, from 0.7 to 7 % of clove essential oil and from 3 to 10 % of cinnamaldehyde.

5. A method for increasing the dairy production of dairy ruminants, **characterized in that** said dairy ruminants receive a feed additive comprising as active compounds an association of thymol, eugenol and cinnamaldehyde, placed on a support.

6. The method according to claim 5, **characterized in that** the feed additive includes, in weight, from 3 to 20 % of thymol, from 0.7 to 4.5 % of eugenol and from 3 to 10 % of cinnamaldehyde, placed on a support.

7. The method according to any one of claims 5 or 6, **characterized in that** the eugenol is introduced into the feed additive through a clove essential oil.

8. The method according to claim 7, **characterized in that** the feed additive includes, in weight, from 3 to 20 % of thymol, from 0.7 to 7 % of clove essential oil and from 3 to 10 % of cinnamaldehyde.

9. The method according to any one of claims 5 to 8, **characterized in that** the feed additive is incorporated into a premix of feed additive(s) for dairy ruminants or into a food for dairy ruminant animals.
